## Europäisches Patentamt
## European Patent Office
## Office européen des brevets

(19)

(11) Numéro de publication: **0 139 579**
**B1**

(12) **FASCICULE DE BREVET EUROPEEN**

(45) Date de publication du fascicule du brevet:
**09.12.87**

(21) Numéro de dépôt: **84401981.0**

(22) Date de dépôt: **04.10.84**

(51) Int. Cl.⁴: **F 16 H 37/04, F 16 H 3/54**

(54) **Boite de vitesses à surmultiplicateur.**

(30) Priorité: **11.10.83 FR 8316126**

(43) Date de publication de la demande:
**02.05.85 Bulletin 85/18**

(45) Mention de la délivrance du brevet:
**09.12.87 Bulletin 87/50**

(84) Etats contractants désignés:
**DE GB IT SE**

(56) Documents cités:
**EP - A - 0 007 881**
**EP - A - 0 028 579**
**EP - A - 0 069 506**
**GB - A - 2 062 140**
**US - A - 2 193 305**
**US - A - 4 324 153**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Bagard, Michel, 21, rue Gustav Rey, 92250 La
Garenne Colombes (FR)**
Inventeur: **Saint-Jean, Alain, 13, rue Eugène Sue,
F-92290 Chatenay-malabry (FR)**
Inventeur: **Verdom, Marc, 4, rue d'Alsace, F-78140 Velizy
(FR)**

(74) Mandataire: **Chassagnon, Jean-Alain et al, REGIE
NATIONALE DES USINES RENAULT (S.0804),
F-92109 Boulogne-Billancourt Cedex (FR)**

## Description

La présente invention se rapporte à une boîte de vitesses mécanique à surmultiplicateur comprenant une roue libre associée à un train épicycloïdal, dont le dispositif de freinage est piloté par un système de commande.

Dans les boîtes de vitesses mécaniques modernes qui se montent sur les véhicules automobiles et objet de la présente invention, il est demandé tout en assurant une conduite correcte du véhicule d'avoir une consommation en carburant la plus faible possible. Dans ce but, dans les boîtes de vitesses mécaniques actuelles, il est de plus en plus proposé une cinquième vitesse avec un rapport extrêmement long afin, en régime établi, de faire tourner le moteur à son régime le plus économique. Ce dispositif présente l'inconvénient de contraindre le pilote du véhicule à changer plus souvent de rapport de vitesse. De nombreux systèmes de rapports supplémentaires sur les boîtes de vitesses mécaniques ont été imaginés et l'on connaît de nombreux dispositifs à surmultiplicateur afin de résoudre ce problème. Les surmultiplicateurs connus présentent l'aspect d'un ensemble rajouté à la boîte de vitesses mécanique, cet ensemble étant relativement volumineux, complexe et surtout très couteux à réaliser, comme celui décrit dans le document GB-A-2 062 140.

A cet effet, l'invention a pour but de proposer une boîte de vitesses mécanique à surmultiplicateur qui peut parfaitement s'intégrer à la boîte de vitesses mécanique classique et qui d'autre part peut facilement être commandée de façon automatique.

Selon un mode de réalisation de l'invention, la boîte de vitesses mécanique à n vitesses à surmultiplicateur comprend une roue libre montée sur l'arbre primaire de ladite boîte de vitesses, et dans le pignon de la vitesse n. La vitesse n + 1 est obtenue sans interruption du couple à transmettre, au moyen d'un train épicycloïdal monté à l'extrémité de l'arbre primaire et du côté opposé au moteur. Ce train épicycloïdal surmultiplie la vitesse n en donnant la vitesse n + 1 au moyen d'un dispositif de freinage piloté par un système de commande.

Le train épicycloïdal comporte un planétaire, des satellites et une couronne, et a sa couronne solidaire du pignon de l'arbre primaire qui comporte la roue libre; le planétaire pouvant être bloqué au moyen du dispositif de freinage.

Selon un mode de réalisation de l'invention, le dispositif de freinage comporte un tambour de frein solidaire du planétaire, et une bande de frein dont l'une des extrémités repose sur un point d'appui et l'autre extrémité est poussée par une vis de commande solidaire en translation du carter et un écrou de poussée solidaire en rotation du carter; un ressort de desserrage étant interposé entre les deux extrémités de la bande de frein.

Selon un mode de réalisation de l'invention, le dispositif de freinage peut comporter un ressort amortisseur de serrage interposé entre l'extrémité de bande qui reçoit l'effort de poussée, et l'écrou de poussée; la vis de commande pouvant pénétrer à l'intérieur dudit ressort amortisseur.

Selon un mode de réalisation de l'invention, le point d'appui est réglable et comporte une vis d'appui qui vient se monter dans le carter avec un écrou.

Selon un mode de réalisation de l'invention, le dispositif de freinage est commandé par un moteur électrique de serrage.

Selon un mode de réalisation de l'invention, le moteur électrique est commandé par impulsion dite «pas à pas» afin de doser l'effort de freinage.

Selon un mode de réalisation de l'invention, la boîte de vitesses mécanique à surmultiplicateur comporte un système de commande du système de freinage qui est automatique et se fait au moyen d'un boîtier électronique. Le boîtier électronique reçoit:

– l'information position du levier de vitesses par un contact de position,

– l'information vitesse du véhicule par un capteur de vitesses,

– l'information charge du moteur par un capteur de charge.

La boîte de vitesses mécanique à surmultiplicateur selon l'invention présente ainsi l'avantage de proposer un système parfaitement intégré à la boîte de vitesses mécanique classique et qui puisse s'automatiser très facilement en respectant une loi de passage.

D'autres caractéristiques et avantages de la présente invention ressortiront de la description qui suit de modes de réalisation donnés à titre d'exemple, en référence aux dessins annexés sur lesquels:

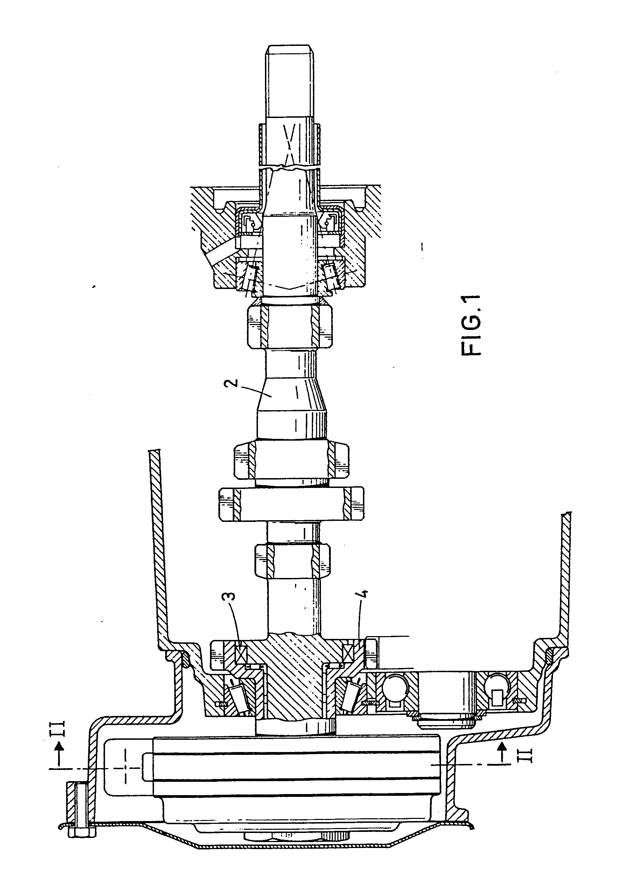

la fig. 1 représente une vue latérale en coupe de la boîte de vitesses mécanique à surmultiplicateur selon l'invention; le train épicycloïdal étant représenté en vue extérieure;

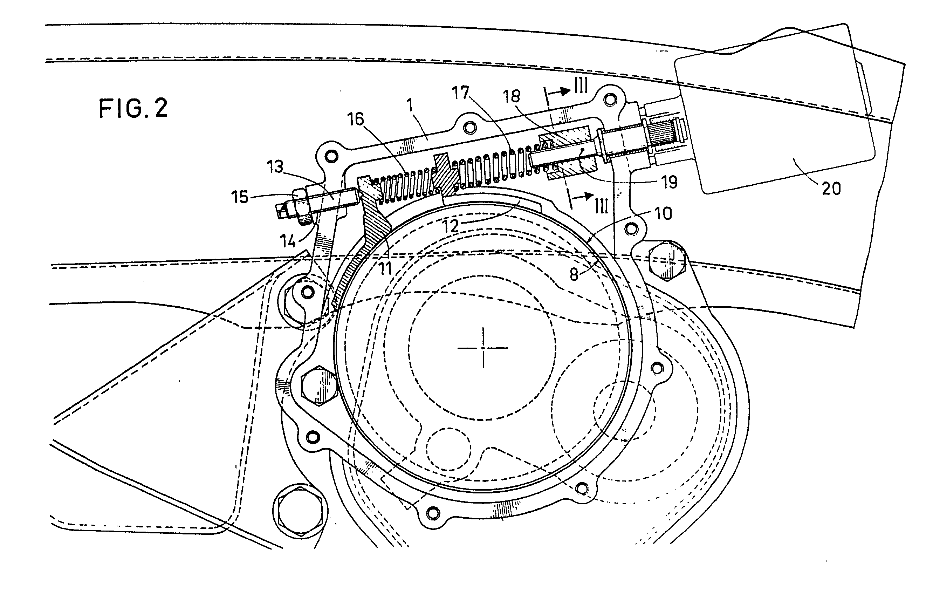

la fig. 2 représente la vue en coupe suivant II–II de la fig. 1, le train épicycloïdal n'étant pas représenté:

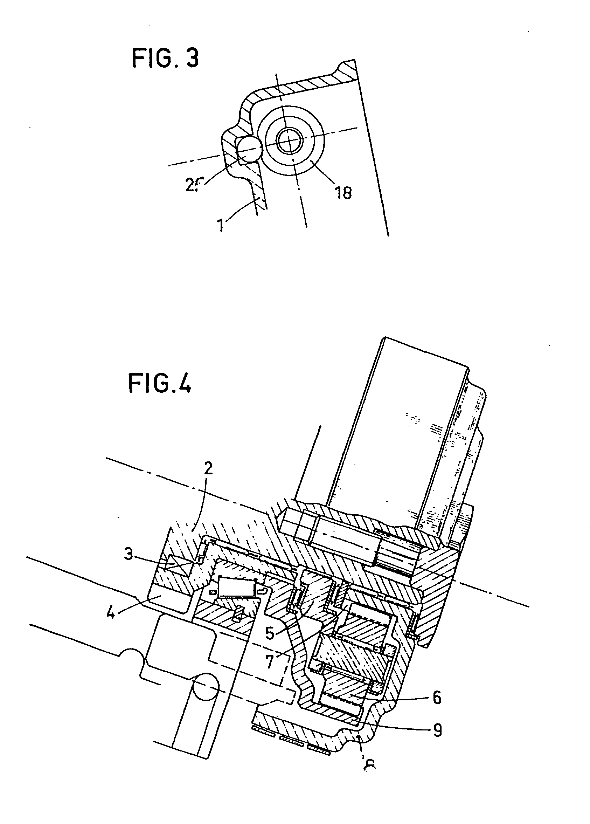

la fig. 3 représente la coupe partielle de la fig. 2 suivant III–III;

la fig. 4 représente la coupe partielle du tambour de frein avec l'ensemble du train épicycloïdal;

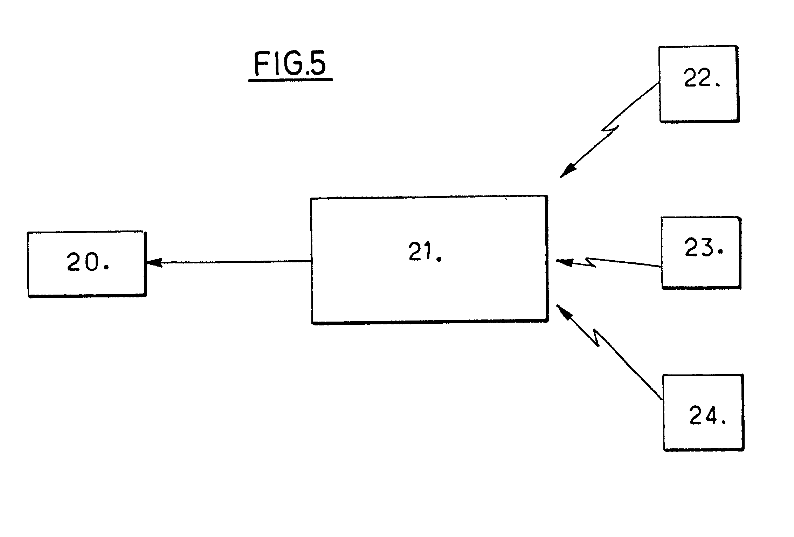

la fig. 5 représente le schéma du dispositif de commande automatique de l'invention.

La boîte de vitesses mécanique à n vitesses à surmultiplicateur selon l'invention a son ensemble surmultiplicateur qui est monté à l'extrémité de l'arbre primaire 2 de la boîte de vitesses mécanique, du côté opposé au moteur. Ce système de surmultiplicateur est monté à l'extérieur du carter classique 1 de boîte de vitesses et utilise le pignon 4 de la vitesse n de la boîte de vitesses mécanique classique. Ce pignon 4 est lié à l'arbre primaire 2 par l'intermédiaire d'une roue libre de tirage 3. De plus le pignon 4 se prolonge par une queue qui est montée libre sur l'arbre primaire 2 à l'aide de cages à aiguilles et de butées à aiguilles.

A l'extérieur du carter 1 de la boîte de vitesses mécanique classique proprement dit est monté le train épicycloïdal. Ce train épicycloïdal comporte une couronne 9 qui est reliée au pignon de la vitesse n 4 par l'intermédiaire de cannelures. Ce train épicycloïdal a des satellites 6 qui sont montés sur un porte-satellites 5; lequel porte-satellites 5 est lié à l'arbre primaire 2 par l'intermédiaire de cannelures. Enfin, le train épicycloïdal comporte un planétaire 7 monté libre sur l'extrémité de l'arbre primaire 2 par l'intermédiaire de cages à aiguilles. De plus ce planétaire 7 se prolonge par un tambour 8 qui est le tambour de frein du dispositif de blocage. Le dispositif de freinage proprement dit selon l'invention, comporte un tambour 8 de frein solidaire du planétaire 7, et une bande de frein 10 dont l'une des extrémités 11 repose sur un point d'appui 13, et l'autre extrémité 12 est poussée par un écrou de poussée 18 et une vis de commande 19. L'écrou de poussée 18 est solidaire en rotation du carter 1 à l'aide d'une bille de blocage 25 de rotation de l'écrou. La vis de commande 19 est solidaire en translation du carter 1. A l'extérieur du carter 1 et sur l'extrémité de la vis de commande 19 est monté un moteur électrique de serrage 20.

Un ressort 16 de desserrage de la bande de frein 10 est disposé entre les extrémités de bande 11 et 12. De plus afin d'assurer une souplesse dans le dispositif de commande de freinage, il est monté un ressort 17 amortisseur de serrage. Ce ressort 17 est disposé entre l'extrémité de bande 12 et une cavité de l'écrou de poussée 18. De plus l'extrémité de la vis de commande 19 peut pénétrer à l'intérieur de ce ressort 17.

Le point d'appui 13 est réglable et comporte à cet effet une vis 14 montée dans le carter et sur lequel vient se bloquer un écrou 15.

Afin de doser l'effort de freinage, le moteur électrique 20 est commandé par impulsion appelé «pas à pas».

Le système de commande du système de freinage est automatique et se fait au moin d'un boîtier électronique 21 qui reçoit les informations suivantes:
– l'information position du levier de vitesses par l'intermédiaire d'un contact de position 22;
– l'information vitesse du véhicule par un capteur de vitesses 23;
– l'information charge du moteur par un capteur de charge 24.

Lorsque le levier de vitesses est sur la position n, le pignon 4 transmet directement le couple moteur au pignon conjugé de l'engrenage de l'arbre secondaire. Dans ce cas, le dispositif de freinage est débloqué le tambour du frein 8 tourne librement. Par conséquent le planétaire 7 tourne également librement. Dans cette configuration le pignon 4 de la vitesse n est solidaire de l'arbre primaire 2 par l'intermédiaire de la roue libre 3 qui étant une roue libre tirage est bloquée dans ce dernier sens tirage. C'est alors le fonctionnement classique d'une boîte de vitesses mécanique pour la vitesse n.

Pour que le surmultiplicateur agisse et donne la vitesse n + 1, il faut que le dispositif de freinage soit mis en action et que la bande du frein 10 soit serrée sur le tambour 8 et bloque donc le planétaire 7 qui lui est solidaire. Dans cette configuration le couple moteur qui vient de l'arbre primaire 2 est transmis au porte-satellites 5 et par l'intermédiaire des satellites 6 à la couronne 9 du train épicycloïdal. La couronne 9 étant solidaire du pignon 4 transmet le couple moteur à ce dernier pignon 4.

Si l'on appelle V p la vitesse de rotation du pignon 4;
V a la vitesse de rotation de l'arbre primaire 2;
P le nombre de dents du planétaire 7;
C le nombre de dents de la couronne 9;
on a la relation

$$Vp = \frac{P + C}{C} \times Va.$$

La vitesse du pignon 4 est ainsi surmultipliée par rapport à la vitesse de l'arbre primaire 2. Le rapport de surmultiplication donné par le train épicycloïdal est:

$$\frac{P + C}{C}$$

Lorsque le dispositif de freinage est débloqué, le train planétaire tourne alors fou et la roue libre 3 se bloque, et la boîte de vitesses repasse automatiquement sur le rapport n.

On est ainsi en présence d'un dispositif surmultiplicateur automatique dont le passage de la vitesse n à la vitesse n + 1 ou de la vitesse n + 1 à la vitesse n se fait toujours sous couple.

Le dispositif de freinage selon l'invention utilise un frein à bande 10 qui vient bloquer le tambour 8. L'extrémité de bande 11 est fixe, mais est réglable à l'aide du point d'appui 13 qui est constitué par le système vis de réglage 14 et écrou 15 faisant office de contre-écrou. L'extrémité de bande 12 est mobile et c'est elle qui est pilotée pour assurer le serrage ou le desserrage du dispositif de freinage.

Le dispositif de freinage lors du serrage fonctionne suivant le mode ci-après. Le moteur électrique 20 fait tourner la vis de commande 19 immobilisée dans le sens axial. Cette vis de commande 19 fait avancer l'écrou de poussée 18 bloqué en rotation par la bille 25. L'écrou de poussée 18 comprime le ressort amortisseur de serrage 17 qui rapproche l'extrémité mobile de bande 12 de l'extrémité fixe de bande 11. La bande de frein 10 bloque alors le tambour 8. Le ressort de serrage 17 assure ainsi une progressivité de serrage qui permet un confort de passage des vitesses sans à-coups.

Le desserrage du dispositif de freinage s'opère de la façon ci-après. Le moteur électrique tourne dans le sens opposé à celui qui a été utilisé pour le serrage et de ce fait l'écrou de poussée 18 s'écarte de l'extrémité de bande 11 fixe. Le ressort de desserrage des bandes 7 écarte alros l'une de l'autre les deux extrémités de bande 11 et 12 et le tambour de frein 8 est ainsi libéré.

Le moteur électrique 20 du dispositif de freinage est piloté au moyen d'un système de commande qui est automatique. Ce pilotage de moteur électrique 20 se fait en fonction d'une loi de passage programmée dans un boîtier électronique 21. Cette loi de passage est fonction de trois paramètres:

 – position du levier de vitesses sur la vitesse n à l'aide d'un contact de vitesses 22;

 – la vitesse du véhicule Vv à l'aide d'un capteur de vitesses 23;

 – l'ouverture du papillon du carburateur α c qui indique la charge du moteur à l'aide d'un capteur de charge 24.

## Revendications

1. Boîte de vitesses mécanique à n vitesses à surmultiplicateur comprenant une roue libre (3) montée sur l'arbre primaire (2), la vitesse n + 1 étant obtenue sans interruption du couple à transmettre, au moyen d'un tain épicycloïdal monté à l'extrémité de l'arbre primaire (2) du côté opposé au moteur; lequel train épicycloïdal surmultiplie la vitesse n en donnant la vitesse n + 1 au moyen d'un dispositif de freinage piloté par un système de commande; caractérisé en ce que ladite roue libre (3) est montée dans le pignon (4) de la vitesse n; ledit train épicycloïdal, qui comporte un planétaire (7), des satellites (6) et une couronne (9), ayant sa couronne (9) solidaire du pignon (4) et son planétaire (7) qui peut être bloqué au moyen du dispositif de freinage, ledit dispositif de freinage étant disposé à l'extérieur dudit train épicycloïdal qui est associé uniquement avec la vitesse n, le couple moteur ne traversant pas le surmultiplicateur dans les autres vitesses.

2. Boîte de vitesses selon la revendication 1, caractérisé en ce que le dispositif de freinage comporte un tambour (8) de frein solidaire du planétaire (7), et une bande de frein (10) dont une extrémité (11) repose sur un point d'appui (13) et l'autre extrémité (12) est poussée par une vis de commande solidaire en translation du carter (1) et en écrou de poussée solidaire en rotation du carter (1); un ressort de desserrage (16) étant interposé entre les deux extrémités (11) et (12).

3. Boîte de vitesses selon la revendication 2, caractérisée en ce que le point d'appui (13) est réglable et comporte une vis d'appui (14) qui vient se monter dans le carter (1), avec un écrou (15).

4. Boîte de vitesses selon la revendication 2, caractérisée en ce que le dispositif de freinage comporte un ressort (17) amortisseur de serrage interposé entre l'extrémité de bande (12) et l'écrou de poussée (18), la vis de commande (19) pouvant pénétrer à l'intérieur dudit ressort (17).

5. Boîte de vitesses selon l'une des revendications précédentes, caractérisée en ce que le dispositif de freinage est commandé par un moteur électrique de serrage (20).

6. Boîte de vitesses selon la revendication 5, caractérisée en ce que le moteur électrique est commandé par impulsion «pas à pas» afin de doser l'effort de freinage.

7. Boîte de vitesses selon l'une des revendications 5 ou 6, caractérisée en ce que le système de commande du système de freinage est automatique et se fait au moyen d'un boîtier électronique (21) qui reçoit:

 – l'information position du levier de vitesses par un contact (22),

 – l'information vitesse véhicule par un capteur vitesse (23);

 – l'information charge moteur par un capteur de charge (24).

## Patentansprüche

1. Schaltgetriebe mit n Gängen und mit Schnellgang, das ein Freilaufrad (3) auf der Eingangswelle (2) aufweist, wobei der Gang n+1 ohne Unterbrechung des zu übertragenden Drehmomentes einlegbar ist mittels eines Planetenradsatzes, der am Ende der Eingangswelle (2) an der dem Motor abgewandten Seite angeordnet ist; der Planetenradsatz vergrössert den Gang n und ermöglicht den Gang n+1 mittels einer Bremsanordnung, die von einer Steueranordnung gesteuert wird, dadurch gekennzeichnet, dass das Freilaufrad (3) im Ritzel (4) des Ganges n angeordnet ist; der Planetenradsatz weist ein Sonnenrad (7), Planetenräder (6) und ein Hohlrad (9) auf, wobei das Hohlrad fest mit dem Ritzel (4) und dem Sonnenrad (7) verbunden ist, das durch die Bremsanordnung blockiert werden kann, welche ausserhalb des Planetenradsatzes vorgesehen ist, der ausschliesslich mit dem Gang n verbunden ist, so dass das Motordrehmoment den Schnellgang nicht in Richtung der anderen Gänge durchsetzt.

2. Schaltgetriebe nach Anspruch 1, dadurch gekennzeichnet, dass die Bremsanordnung eine Bremstrommel (8) aufweist, die fest mit dem Sonnenrad (7) verbunden ist, sowie ein Bremsband (10) aufweist, dessen eines Ende (11) sich auf einem Haltepunkt (13) abstützt und dessen anderes Ende (12) von einer in Translationsrichtung mit dem Gehäuse (1) verbundenen Steuerschraube und von einer in Rotationsrichtung mit dem Gehäuse (1) verbundenen Druckmutter beaufschlagt wird; zwischen den beiden Enden (11 und 12) ist eine Entspannungsfeder (16) angeordnet.

3. Schaltgetriebe nach Anspruch 2, dadurch gekennzeichnet, dass der Stützpunkt (13) einstellbar ist und eine Stützschraube (14) aufweist, die mit Hilfe einer Mutter (15) im Gehäuse (1) eingesetzt ist.

4. Schaltgetriebe nach Anspruch 2, dadurch gekennzeichnet, dass die Bremsanordnung eine die Klemmwirkung dämpfende Feder (17) aufweist, die zwischen dem Ende des Bandes (12) und der Druckmutter (18) eingesetzt ist, wobei die Steuerschraube (19) in das Innere dieser Feder (17) eindringen kann.

5. Schaltgetriebe nach einem der vorhergehenden Ansprüche, dadurch gekennzeichnet, dass die Bremsanordnung durch einen elektrischen Klemmmotor (20) steuerbar ist.

6. Schaltgetriebe nach Anspruch 5, dadurch gekennzeichnet, dass der elektrische Motor durch

**0139579**

Schrittimpulse steuerbar ist, um die Bremswirkung einzustellen.

7. Schaltgetriebe nach einem der Ansprüche 5 oder 6, dadurch gekennzeichnet, dass die Steueranordnung für die Bremsanordnung automatisch ist und durch eine elektronische Schaltung (21) gesteuert wird, welche erhält:

— eine Stellungsinformation des Schalthebels über einen Kontakt (22),

— eine Geschwindigkeitsinformation des Fahrzeugs über einen Geschwindigkeitsfühler (23),

— eine Belastungsinformation für den Motor über einen Belastungsfühler (24).

**Claims**

1. A mechanical gearbox having n speeds with an overdrive comprising a free wheel (3) mounted on the primary shaft (2), the speed n+1 being obtained without interruption in the torque to be transmitted, by means of an epicyclic train mounted at the end of the primary shaft (2) on the opposite side to the engine; said epicyclic train providing overdrive in respect of the speed n, giving the speed n+1, by means of a braking device which is pilot-controlled by a control system; characterised in that said free wheel (3) is mounted in the pinion (4) of the speed n; said epicyclic train which comprises a sun gear (7), planet gears (6) and a ring gear (9), having its ring gear (9) fixed with respect to the pinion (4) and its sun gear (7) which can be blocked by means of the braking device, said braking device being disposed on the outside of said epicyclic train which is associated solely with the speed n, the engine torque not passing through the overdrive in the other speeds.

2. A gearbox according to claim 1, characterised in that the braking device comprises a brake drum (8) which is fixed with respect to the gear (7), and a brake band (10) of which one end (11) rests against a support point (13) and the other end (12) is pushed by a control screw which is fixed in respect of translatory movement with the casing (1) and a thrust nut which is fixed in respect of rotation with the casing (1); a release spring (16) being interposed between the two ends (11, 12).

3. A gearbox according to claim 2, characterised in that the support point (13) is adjustable and comprises a support screw (14) which is mounted in the casing (1), with a nut (15).

4. A gearbox according to claim 2, characterised in that the braking device comprises a tightening damper spring (17) interposed between the band end (12) and the thrust nut (18), wherein the control screw (19) can engage into the interior of said spring (17).

5. A gearbox according to one of the preceding claims, characterised in that the braking device is controlled by an electric brake-applying motor (20).

6. A gearbox according to claim 5, characterised in that the electric motor is controlled by stepping pulses in order to meter the braking force.

7. A gearbox according to one of claims 5 and 6, characterised in that the system for controlling the braking system is automatic and is effected by means of an electronic box (21) which receives:

— information in respect of the gear lever by means of a contact (22),

— information in respect of vehicle speed by means of a speed detector (23), and

— information in respect of engine load by means of a load detector (24).

FIG.1

FIG. 2

0139579

FIG. 3

FIG.4

11

FIG.5